# FASCICULE DE BREVET EUROPEEN

(11) **EP 0 686 537 B1**
(45) Date de publication et mention de la délivrance du brevet: **02.12.1998**
(21) Numéro de dépôt: 95108247.8
(22) Date de dépôt: 30.05.1995
(51) Int. Cl.: B60S 1/16, F16H 57/02

(54) **Moto-réducteur comprenant un carter creux muni d'une plaque de fermeture, notamment moto-réducteur d'essuyage**
Getriebemotor mit einem hohlen, mit einem Verschlussdeckel versehenen Gehäuse, insbesondere Scheibenwischer-Getriebemotor
Geared motor having a hollow housing equipped with a closure plate, especially a geared motor for a wiping system

(30) Priorité: 06.06.1994 FR 9411659
(43) Date de publication de la demande: 13.12.1995
(73) Titulaire: VALEO SYSTEMES D'ESSUYAGE, 78321 La Verrière (FR)
(72) Inventeur: Blanchet, Pierre, F-86140 Lencloitre (FR); Hommelet, Stéphane, F-86100 Chatellerault (FR)
(74) Mandataire: Gamonal, Didier

(56) Documents cités:
- EP-A- 0 479 673
- DE-A- 4 101 063
- FR-A- 2 552 723

## Description

La présente invention se rapporte à un motoréducteur comprenant un carter creux muni d'une plaque de fermeture, notamment moto-réducteur d'essuyage, comme indiqué dans le préambule de la revendication 1.

Un tel motoréducteur est connu par le document FR-2 667 670 et comprend généralement un moteur électrique d'entraînement et un mécanisme réducteur, notamment un mécanisme à vis sans fin enfermé dans un carter creux muni d'une plaque de fermeture.

Ce carter comporte dans son volume creux, comme cela est connu, une roue dentée entraînée en rotation par la vis sans fin et actionnant, par l'intermédiaire d'un pion excentré porté par ladite roue, un système biellemanivelle commandant, dans un mouvement de rotation alternatif, un arbre de sortie traversant le fond du carter pour mettre en mouvement un dispositif d'essuyage.

Le système bielle-manivelle est composé d'un bras relié, à une extrémité, au pion excentré de la roue dentée et présentant, à l'autre extrémité, un secteur denté engrenant avec un autre secteur denté lié de manière fixe à l'arbre de sortie. Pour que les deux secteurs dentés restent constamment en prise, ils sont reliés de part et d'autre par des balanciers.

Un tel moto-réducteur doit pouvoir transmettre des forces très importantes et le système bielle-manivelle est soumis, non seulement à des efforts transmis par la roue dans l'axe de la bielle qui peuvent entraîner le système bielle-manivelle à s'arc-bouter entraînant un déplacement axial du pivot dudit système, mais aussi à des efforts axiaux dans l'axe du pion ou dans l'axe de l'arbre de sortie.

Il a déjà été proposé dans une précédente demande du déposant, le document FR-A-2 667 670, d'immobiliser en translation axiale le pion excentré porté par la roue dentée en le calant contre le couvercle de fermeture au moyen d'une plaque de frottement fixée contre la surface interne du couvercle et sur laquelle vient s'appuyer l'extrémité dudit pion. Ledit document propose également une rondelle de frottement entourant l'extrémité de l'arbre de sortie et disposée contre la surface interne du couvercle de fermeture, en appui sur l'un des balanciers entourant ledit arbre de sortie .

Ces solutions permettent d'éviter que le pion excentré ou l'arbre de sortie, sous l'effet des efforts axiaux, ne vienne heurter la surface interne du couvercle intempestivement, en générant des bruits, mais le problème existe toujours au niveau du système bielle-manivelle.

On se propose donc de trouver un moyen simple et économique d'améliorer le fonctionnement des liaisons pivots au niveau de l'axe excentré de la roue et au niveau de la liaison bielle/manivelle.

D'autre part, afin de rendre étanche à la graisse et à la poussière la liaison plaque de fermeture/carter, on dispose habituellement un joint entre le bord de ladite plaque de fermeture et celui du carter. Mais ce joint, réalisé couramment dans une matière très fragile, est une pièce qui peut facilement être déchirée au cours des manipulations de montage. De plus, comme cette pièce est très maléable, sa mise en place à la jointure du carter et de la plaque de fermeture est assez délicate.

Pour éviter ces problèmes, selon l'invention, le moto-réducteur comprenant un carter creux muni d'une plaque de fermeture, notamment moto-réducteur d'essuyage, comportant, dans le volume creux dudit carter, une roue dentée mobile en rotation autour d'un axe, portant un pion, parallèle audit axe et excentré par rapport à celui-ci, qui entraîne un système bielle-manivelle, articulé autour d'un pivot, permettant d'engendrer, à partir du mouvement de rotation continue de ladite roue dentée, un mouvement de rotation alternatif à un arbre de sortie relié à l'extrémité de la manivelle, comporte en outre, un joint périphérique disposé entre le bord supérieur du carter et la plaque de fermeture, et une surépaisseur de frottement disposée de manière fixe sur la face interne dirigée vers le carter de la plaque de fermeture. Il est caractérisé en ce que le joint périphérique et la plaque de frottement forment une pièce monobloc.

Grâce à l'invention, le joint est intégré à une pièce monobloc donc beaucoup plus rigide et la manipulation de cette pièce et sa mise en place à la jointure du carter et de la plaque de fermeture en est facilitée.

Selon une autre caractéristique ladite pièce monobloc comporte, disposée sur la face interne dirigée vers le carter de la plaque de fermeture, une surface d'appui de l'extrémité de la manivelle au niveau du pivot.

Cette solution présente l'avantage de regrouper en une seule pièce des fonctions d'étanchéité, en empêchant de la graisse ou de la poussière de pénétrer à l'intérieur du carter, et d'appui, du pion excentré porté par la roue dentée, et du pivot du système bielle-manivelle. Ceci améliore ainsi l'engrènement des secteurs dentés et les liaisons pivot au niveau de l'axe excentré de la roue et au niveau de la liaison bielle/manivelle, limitant le bruit au niveau de ces liaisons et augmentant la durée de vie des différentes pièces du moto-réducteur.

Selon une autre caractéristique de l'invention, la surface d'appui comporte au moins une piste en arc de cercle disposée concentriquement à l'arbre de sortie.

Selon une autre caractéristique de l'invention, la surface d'appui comporte deux pistes concentriques formant une fente en arc de cercle.

Selon une autre caractéristique de l'invention, le cercle servant de support à la fente en arc de cercle est centré sur l'axe de l'arbre de sortie et présente un rayon sensiblement égal à la distance séparant ledit axe de l'arbre de sortie de l'axe du pivot du système bielle-manivelle.

Grâce aux caractéristiques précédentes, la surface d'appui de l'invention se trouve disposée sur tout le cheminement du pivot du système bielle-manivelle dans son mouvement de rotation autour de l'arbre de sortie.

Selon une autre caractéristique de l'invention, la plaque de frottement de la pièce monobloc est prévue sur tout le cheminement circulaire du pion autour de l'axe de la roue dentée.

Selon un autre aspect de l'invention, la pièce monobloc comporte en outre une rondelle de frottement évidée disposée coaxialement à l'arbre de sortie. Cette rondelle permet d'assurer un appui au niveau de l'arbre de sortie en immobilisant celui-ci en translation axiale et contre tous mouvements radiaux de l'extrémité dudit arbre.

Selon une autre caractéristique de l'invention, les différents éléments, joint et/ou surépaisseur de frottement et/ou rondelle de frottement et/ou surface d'appui, de la pièce monobloc sont reliés entre eux par des moyens de liaison moulés dans la pièce monobloc avec les diférents éléments de ladite pièce.

Selon une autre caractéristique de l'invention, la pièce monobloc est en un matériau à faible coefficient de frottement.

D'autres caractéristiques et avantages apparaîtront à la lecture de la description suivante en se référant aux dessins annexés parmi lesquels:
- la figure 1 est une vue schématique en coupe montrant un moto-réducteur muni d'une plaque de fermeture selon l'invention;
- la figure 2 est une vue en élévation d'un moto-réducteur montrant les pistes d'appui, concentriques à l'arbre de sortie, rapportées sous la plaque de fermeture, et dans laquelle on considère que la plaque de fermeture est transparente;
- la figure 3 est une vue en élévation de la pièce selon l'invention, dénommée joint-butée, dans laquelle s'intègre les pistes concentriques d'appui.

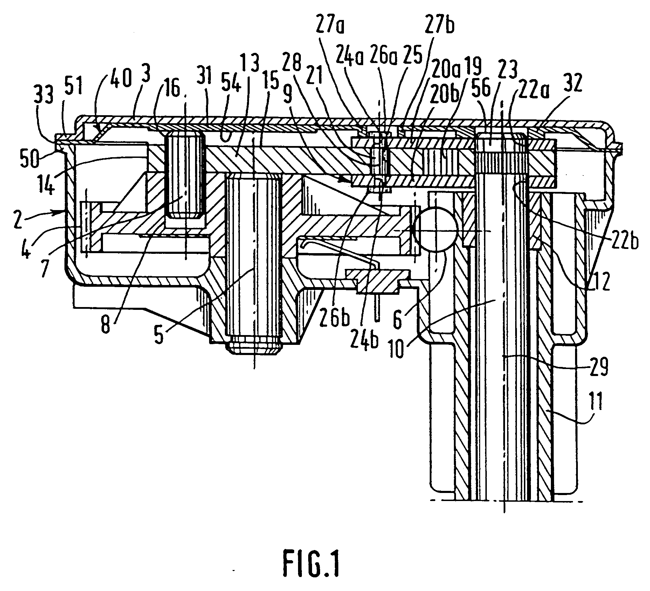

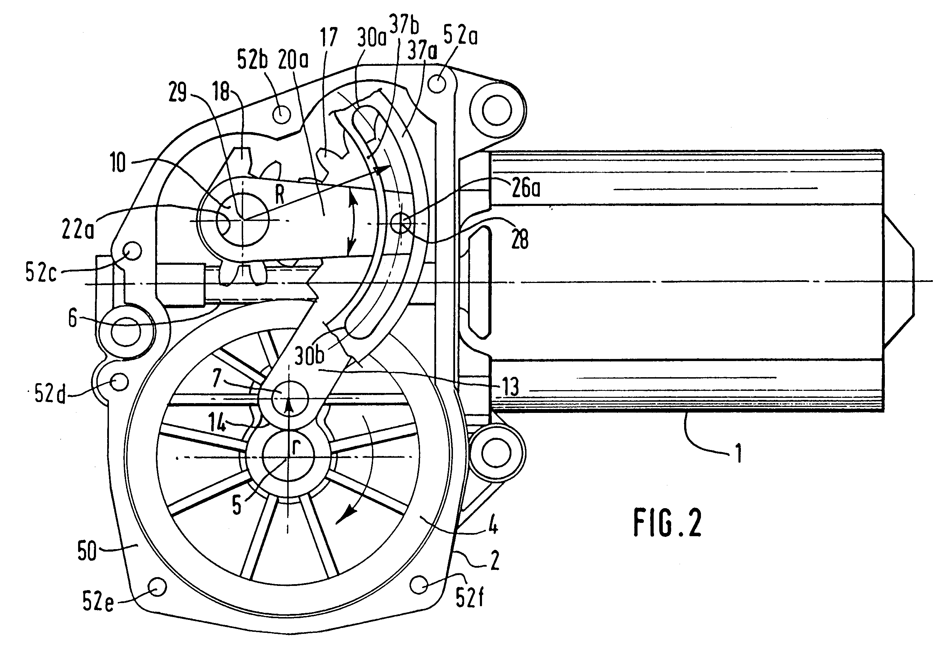

Sur les figures 1 et 2, on a représenté un moto-réducteur, notamment pour l'entraînement d'un système d'essuyage, comprenant un moteur électrique 1 et un carter creux 2 muni d'une plaque de fermeture 3. Ce carter contient un système de réduction constitué d'une roue dentée 4 mobile en rotation autour d'un axe 5 et entraînée par une vis sans fin 6 issue du rotor du moteur électrique 1.

La roue 4 porte un pion 7, parallèle à l'axe 5 et sensiblement excentré par rapport à celui-ci, monté libre en rotation dans un logement 8 de la roue 4.

Le pion 7 est relié à un système bielle-manivelle 9 qui permet de transformer le mouvement de rotation de ladite roue 4 en mouvement de rotation alternatif à un arbre de sortie 10. Ledit arbre de sortie 10 est logé dans un fût 11 situé au fond du carter 2 en reposant sur un palier 12.

Le système bielle-manivelle 9 est composé d'un bras 13 formant bielle, relié à l'une 14 de ses extrémités au pion 7 en laissant dépasser, au delà de sa face externe 15, un tronçon d'extrémité 16 du pion 7, et présentant à l'autre extrémité un secteur denté 17. Ce secteur denté s'engrène en 19 avec un autre secteur denté 18, lié de manière fixe à l'arbre de sortie 10.

Les deux secteurs dentés 17 et 18 sont maintenus constamment en prise grâce à deux balanciers 20a et 20b, situés de part et d'autre des faces longitudinales desdits secteurs dentés, en formant une manivelle et en permettant de relier rigidement le bras 13 et l'arbre de sortie 10. Ces deux balanciers sont maintenus ensembles, d'une part par l'intermédiaire d'une ouverture 22a (pour le balancier 20a) et 22b (pour le balancier 20b) prévue à une extrémité desdits balanciers et qui vient entourer l'extrémité 23 de l'arbre de sortie 10, et d'autre part par un pivot 21, libre en rotation, disposé à l'autre extrémité desdits balanciers.

Les deux balanciers ont ainsi un mouvement de rotation autour de l'arbre de sortie 10.

En variante non représentée, le système bielle-manivelle est composé d'un premier bras relié, à une extrémité au pion porté par la roue denté, et à l'autre extrémité à un deuxième bras par l'intermédiaire d'un axe de pivotement, ce deuxième bras étant lui-même relié à l'arbre de sortie.

Comme mieux visible sur la figure 1, le pivot 21 comporte deux diamètres différents, un premier diamètre, dans sa partie centrale, sensiblement inférieur à celui de l'alésage 25 du bras 13 de manière à ce que le pivot vienne s'insérer avec un jeu minime dans ledit bras 13, et un second diamètres, à ses deux extrémités, sensiblement inférieur à celui des alésages 24a et 24b des deux balanciers.

En relation avec la figure 1, le pivot 21 a une dimension axiale supérieure à l'épaisseur réunie des deux balanciers 20a, 20b et du bras 13 de manière à dégager deux extrémités 26a et 26b qui dépassent de part et d'autre des balanciers. Ces extrémités sont écrasées pour former deux rivetages, que l'on désignera aussi par 26a et 26b, qui maintiennent axialement les deux balanciers 20a, 20b autour de l'arbre 13.

En considérant la figure 1, le carter 2 est fermé à sa partie supérieure par une plaque de fermeture 3, généralement réalisée à partir d'une feuille métallique de faible épaisseur, et reliée aux bords dudit carter par tous moyens connus tel que serrage par vis ou rivetage.

Cette plaque de fermeture présente, sur sa face interne, une surépaisseur 27a, 27b entourant le rivetage 26a et formant deux pistes concentriques à l'arbre de sortie 37a et 37b comme mieux visible sur la figure 2.

Cette surépaisseur 27a, 27b, est dans l'exemple représenté, en un matériaux plastique à faible coefficient de frottement et est rapportée, en appui, de manière fixe sur ladite plaque de fermeture.

Il est en outre prévu que les pistes concentriques 37a et 37b soient d'une épaisseur telle que cette surépaisseur 27a, 27b soit en contact avec la surface supérieure du balancier 20a comme mieux visible sur la figure 1.

Les pistes concentriques 37a et 37b forment une fente de guidage en arc de cercle et grâce à la composition et à la forme de cette fente en arc de cercle 37a, 37b, le rivetage 26a, dépassant de la surface du balancier 20a, peut glisser dans ladite fente de guidage. Pour cette raison, le rayon R du cercle servant de support à l'arc de cercle formant ladite fente de guidage 37a, 37b correspond à la distance entre l'axe 29 de l'arbre de sortie 10 et l'axe 28 du pivot 21.

Ainsi, les balanciers 20a, 20b, sont guidés dans leur mouvement de rotation autour de l'arbre 10 par le rivetage 26a glissant entre les pistes concentriques 37a et 37b. De plus, le contact de la surépaisseur 27a, 27b avec les balanciers 20a, 20b évite l'arc-boutement desdits balanciers lorsque le bras 13 formant bielle transmet le mouvement de rotation audits balanciers. Les pistes concentriques d'appui 37a et 37b permettent ainsi de supprimer les efforts axiaux, dus par exemple à une mauvaise position de travail, qui cumulés avec les efforts radiaux, détériorent la liaison entre le pivot 21 et le bras formant bielle 13.

En outre, les deux extrémités 30a et 30b de la fente en arc de cercle 37a, 37b peuvent servir de butées de fin de course pour le sertissage 26a de manière à limiter les à-coups aux moments des changements de sens de l'engrènement.

Dans l'exemple présenté sur la figure 1, la face interne de la plaque de fermeture 3 présente, en plus de la surépaisseur 27a, 27b, deux surépaisseurs 31 et 32.

Ces surépaisseurs sont parties intégrantes d'une pièce 40 comprenant un joint 33 placé entre le bord du carter 2 et le bord de la plaque de fermeture 3.

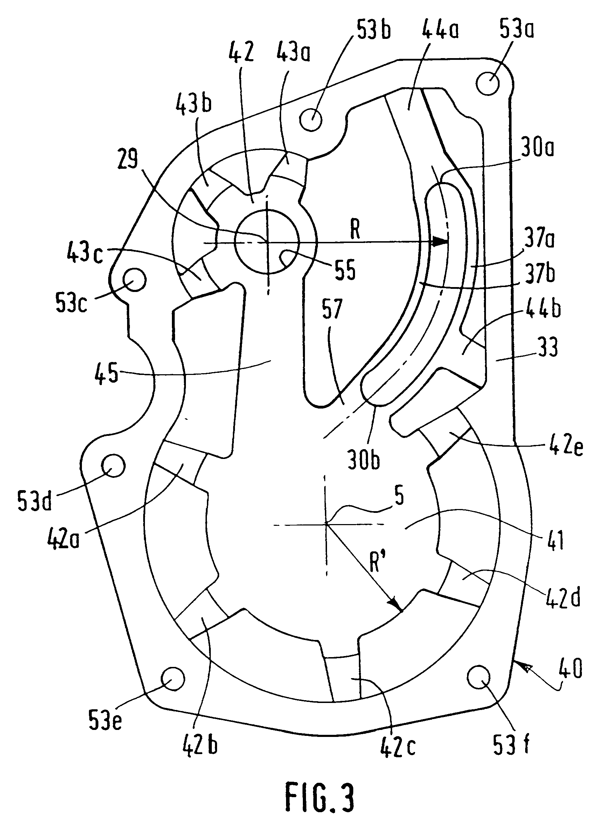

A la figure 3, on a représenté un mode de réalisation de la pièce 40, que nous désignerons par joint-butée, comprenant un joint 33, à la périphérie de ladite pièce 40, une plaquette plane 41 de forme circulaire, une rondelle 42 et la fente de guidage en arc de cercle 37a, 37b.

Ce joint-butée 40 est en un matériau à faible coefficient de frottement et il est prévu qu'il soit positionné en appui sur la plaque de fermeture 3, le joint 33 étant situé entre le bord supérieur 50 du carter 2 et le bord 51 de la plaque de fermeture 3 comme mieux visible sur la figure 1.

Ce joint 33 a une forme calquée sur celle du bord supérieur 50 du carter 2, en se référant à la figure 2, et à des perçages 52a-52f situés sur ledit bord supérieur 50 correspondent des perçages 53a-53f du joint 33 (visibles à la figure 3), ces perçages servant à relier ensemble le carter 2 et la plaque de fermeture 3, au moyen de vis ou de rivets par exemple.

Le joint 33 se glisse ainsi exactement à la jointure de la plaque de fermeture 3 et du carter 2 et il assure une liaison étanche de ces deux éléments. Il empêche en effet de la graisse ou des poussières de pénétrer à l'intérieur du carter.

En relation avec la figure 3, la plaquette 41 présente une forme périphérique circulaire dont le rayon R' est au moins égal au rayon r considéré entre l'axe 5 de rotation de la roue 4 et l'axe du pion 7 (visible à la figure 2), de préférence R' est égal au rayon r augmenté du rayon du pion 7. Ladite plaquette est placée coaxialement avec l'axe 5 et en appui sur la plaque de fermeture 3.

Ainsi lors du montage et du vissage de la plaque de fermeture 3 sur le bord 50 du carter, il est prévu que la face externe 54, dirigée vers le carter 2, de la plaquette 41 vienne porter à glissement sur la surface supérieure située à l'extrémité 16 du pion 7.

Grâce à la composition et à la forme circulaire de la plaquette 41, la surface de l'extrémité 16 du pion 7 peut glisser facilement tout au long du mouvement circulaire du pion 7 autour de l'axe 5 alors que le pion 7, et donc également l'extrémité 14 du bras formant bielle 13, est calé en direction axiale.

En se référant à la figure 3, la rondelle évidée 42 présente un alésage 55 de diamètre sensiblement supérieur au diamètre de l'extrémité 23 de l'arbre de sortie 10. Elle est disposée coaxialement avec l'axe 29 de l'arbre de sortie 10 de manière à venir entourer l'extrémité 23 en prenant appui, sur le balancier 20a d'une part, et sur la plaque de fermeture d'autre part, lorsque cette dernière est mise en place sur le carter 2, comme mieux visible sur la figure 1.

Bien entendu, il est prévu un espace entre la surface terminale 56 de l'extrémité 23 de l'arbre de sortie et la surface interne, celle dirigée vers l'intérieur du carter 2, de la plaque de fermeture 3, lorsque cette dernière est mise en place sur ledit carter. La surépaisseur 32 sera prévue pour être d'une épaisseur suffisante pour que l'extrémité 23 de l'arbre 10 ne vienne pas en contact avec la face interne de la plaque de fermeture 3.

Ainsi, l'arbre de sortie 10 est immobilisé en translation axiale grâce à la surépaisseur 32, mais aussi tous mouvements radiaux de la portion d'arbre 10 située au delà du palier 12 sont empêchés par la disposition de l'extrémité 23 dans l'alésage 55 de la rondelle 42 servant dans ce cas de palier radial.

Le joint-butée 40 permet donc d'avoir une pièce unique assurant les fonctions:
- d'étanchéité à la graisse et à la poussière de la liaison carter 2/plaque de fermeture 3 grâce au joint 33,
- d'appui et de maintien radial au niveau de l'arbre de sortie 10 grâce à la rondelle 42,
- d'appui et de frottement du bras formant bielle 13 au niveau de la roue 4 grâce à la plaquette 41,
- et d'appui et de guidage de l'extrémité du balancier formant manivelle pour éviter son arc-boutement grâce à la fente en arc de cercle 37a, 37b.

Les liaisons, comme la liaison entre le pivot 21 et le bras formant bielle 13, la liaison entre le pion 7 et la roue 4 et la liaison entre l'arbre d'axe 5 portant la roue 4 et ladite roue, s'en trouvent améliorées ainsi que l'engrènement entre les secteurs dentés 17 et 18.

En pratique, et comme cela est visible sur la figure 3, la fente en arc de cercle 37a, 37b est reliée au joint 33 par des languettes 44a et 44b, la plaquette 41 est reliée au joint 33 par une pluralité de languettes 42a-42e et la rondelle 42 est reliée au joint 33 par des languettes 43a-43c. De plus la fente en arc de cercle 37a, 37b est reliée à la plaquette 41 en une jonction 57 et un bras 45 relie entre elles la rondelle 42 et la plaquette 41. Ainsi, le joint-butée 40 est une pièce monobloc pouvant être par exemple moulée.

Bien entendu, il est possible de ne pas relier ensembles dans une même pièce les éléments: fente en arc de cercle 37a, 37b, plaquette 41, rondelle 42 et joint 33, par exemple en fixant directement l'un ou plus de ces éléments directement sur la face interne de la plaque de fermeture 3 au moyen de picots ou par tout autre moyen connu.

D'autre part, dans le cas où la plaque de fermeture 3 est réalisée en matière plastique, il est prévu que cette matière soit à faible coefficient de frottement de manière à élaborer, conjointement avec la plaque de fermeture, les surépaisseurs 27a, 27b de la fente en arc de cercle 37a, 37b et/ou la surépaisseur 31 de la plaquette 41 et/ou la surépaisseur 32 de la rondelle 42 en réalisant une seule pièce dans la même matière.

On a décrit ici l'invention dans le cas d'un moto-réducteur où l'embiellage est formé par un bras formant bielle muni d'un secteur denté s'engrenant dans un autre secteur denté mais elle peut naturellement s'appliquer à tout type de moteur avec un mécanisme bielle-manivelle incorporé.

## Revendications

1. Moto-réducteur comprenant un carter creux (2) muni d'une plaque de fermeture (3), notamment moto-réducteur d'essuyage, comportant, dans le volume creux dudit carter, une roue dentée (4) mobile en rotation autour d'un axe (5) portant un pion (7), parallèle à l'axe (5) et excentré par rapport à celui-ci, qui entraîne un système bielle (13,17)- manivelle (20a,20b), articulé autour d'un pivot (21), permettant d'engendrer, à partir du mouvement de rotation continue de ladite roue dentée (4), un mouvement de rotation alternatif à un arbre de sortie (10) relié à l'extrémité de la manivelle (20a, 20b), comportant en outre, un joint périphérique (33) disposé entre le bord supérieur (50) du carter (2) et la plaque de fermeture (3), et une surépaisseur de frottement (31) disposée de manière fixe sur la face interne dirigée vers le carter (2) de la plaque de fermeture (3), caractérisé en ce que le joint périphérique (33) et la plaque de frottement (31, 41) forment une pièce monobloc (40).

2. Moto-réducteur selon la revendication 1 caractérisé en ce que la pièce monobloc (40) comporte, disposée sur la face interne dirigée vers le carter (2) de la plaque de fermeture (3), une surface d'appui (27a, 27b) de l'extrémité de la manivelle (20a) au niveau du pivot (21).

3. Moto-réducteur selon la revendication 2 caractérisé en ce que la surface d'appui (27a, 27b) comporte au moins une piste en arc de cercle (37a, 37b) disposée concentriquement à l'arbre de sortie (10).

4. Moto-réducteur selon l'une quelconque des revendications 2 ou 3 caractérisé en ce que la surface d'appui (27a, 27b) comporte deux pistes concentriques (37a) et (37b) formant une fente en arc de cercle.

5. Moto-réducteur selon la revendication 4 caractérisé en ce que le cercle servant de support à la fente en arc de cercle (37a, 37b) est centré sur l'axe (29) de l'arbre de sortie (10) et présente un rayon R sensiblement égal à la distance séparant l'axe (29) de l'arbre de sortie de l'axe (28) du pivot (21).

6. Moto-réducteur selon la revendication 1 caractérisé en ce que la surépaisseur de frottement (31, 41) est prévue sur tout le cheminement circulaire du pion (7) autour de l'axe (5) de la roue dentée (4).

7. Moto-réducteur selon l'une quelconque des revendications précédentes caractérisé en ce que la pièce monobloc (40) comporte en outre une rondelle de frottement évidée (32, 42) disposée coaxialement à l'arbre de sortie (10).

8. Moto-réducteur selon l'une quelconque des revendications précédentes caractérisé en ce que les différents éléments, joint (33) et/ou surépaisseur de frottement (31, 41) et/ou rondelle de frottement (32, 42) et/ou surface d'appui (27a, 27b), de la pièce monobloc (40) sont reliés entre eux par des moyens de liaison (42a-42e, 43a-43c, 44a-44b, 45) moulés avec les différents éléments de ladite pièce (40).

9. Moto-réducteur selon l'une quelconque des revendications précédentes caractérisé en ce que la pièce monobloc (40) est en un matériau à faible coefficient de frottement.

## Claims

1. A motorised drive unit comprising a hollow casing (2) having a cover plate (3), in particular a motorised wiper drive unit, comprising, within the hollow interior of the said casing, a toothed wheel (4) which is rotatable about an axis (5) carrying a gudgeon pin (7) parallel to the axis (5) and eccentric with respect to the latter, which drives a system comprising a connecting rod (13, 17) and a crank (20a, 20b), articulated about a pivot pin (21), whereby to derive, from the continuous rotary motion of the said toothed wheel (4), an alternating rotary motion of an output shaft (10) connected to the end of the crank (20a, 20b), further including a peripheral gasket portion (33) disposed between the upper edge (50) of the casing (2) and the cover plate (3), and a thickened friction portion (31) disposed fixedly on the internal face of the cover plate (3) that faces towards the casing (2), characterised in that the peripheral gasket portion (33) and the friction plate (31, 41) constitute a monobloc component (40).

2. A motorised drive unit according to Claim 1, characterised in that the monobloc component (40) includes, disposed on the internal face of the cover plate (3) that faces towards the casing (2), a surface (27a, 27b) for engagement with the end of the crank (20a) at the pivot pin (21).

3. A motorised drive unit according to Claim 2, characterised in that the engagement surface (27a, 27b) includes at least one arcuate contact track (37a, 37b) disposed concentrically with the output shaft (10).

4. A motorised drive unit according to either Claim 2 or Claim 3, characterised in that the engagement surface (27a, 27b) comprises two concentric contact tracks (37a and 37b) defining an arcuate slot.

5. A motorised drive unit according to Claim 4, characterised in that the circle serving as a support for the arcuate slot (37a, 37b) is centred on the axis (29) of the output shaft (10), and has a radius R which is substantially equal to the distance separating the axis (29) of the output shaft from the axis (28) of the pivot pin (21).

6. A motorised drive unit according to Claim 1, characterised in that the thickened friction portion (31, 41) is arranged over the whole circular path of the gudgeon pin (7) about the axis (5) of the toothed wheel (4).

7. A motorised drive unit according to any one of the preceding Claims, characterised in that the monobloc component (40) further includes a perforated friction ring portion (32, 42) disposed coaxially with the output shaft (10).

8. A motorised drive unit according to any one of the preceding Claims, characterised in that the various elements of the monobloc component (40), consisting of the gasket portion (33) and/or the thickened friction portion (31, 41) and/or the friction ring portion (32, 42) and/or the engagement surface (27a, 27b), are joined together by connecting means (42a - 42e, 43a - 43c, 44a - 44b, 45) which are moulded with the various elements of the said component (40).

9. A motorised drive unit according to any one of the preceding Claims, characterised in that the monobloc component (40) is of a material having a low coefficient of friction.

## Patentansprüche

1. Getriebemotor mit einem hohlen, mit einer Verschlußplatte (3) versehenen Gehäuse (2), insbesondere Scheibenwischer-Getriebemotor, der im Hohlraum des besagten Gehäuses ein um eine Achse (5) drehbewegliches Zahnrad (4) umfaßt, das einen parallel zur Achse (5) und im Verhältnis zu dieser außermittig angeordneten Stift (7) trägt, der einen Kurbeltrieb mit Gelenkstange (13, 17) und Kurbel (20a, 20b) antreibt, der um einen Gelenkzapfen (21) angelenkt ist und, ausgehend von der kontinuierlichen Drehbewegung des besagten Zahnrads (4), die Erzeugung einer Pendeldrehbewegung an einer mit dem Ende der Kurbel (20a, 20b) verbundenen Ausgangswelle (10) ermöglicht, wobei er außerdem eine Umfangsdichtung (33), die zwischen der Oberkante (50) des Gehäuses (2) und der Verschlußplatte (3) angeordnet ist, und eine Reiberhebung (31) umfaßt, die fest auf der zum Gehäuse (2) gerichteten Innenfläche der Verschlußplatte (3) angeordnet ist, **dadurch gekennzeichnet,** daß die Umfangsdichtung (33) und die Reibplatte (31, 41) ein einteiliges Element (40) bilden.

2. Getriebemotor nach Anspruch 1, **dadurch gekennzeichnet,** daß das einteilige Element (40), auf der zum Gehäuse (2) gerichteten Innenfläche des Verschlußdeckels (3) angeordnet, eine Auflagefläche (27a, 27b) des Endes der Kurbel (20a) in Höhe des Gelenkzapfens (21) umfaßt.

3. Getriebemotor nach Anspruch 2, **dadurch gekennzeichnet,** daß die Auflagefläche (27a, 27b) mindestens eine kreisbogenförmige Bahn (37a, 37b) umfaßt, die konzentrisch zur Ausgangswelle (10) angeordnet ist.

4. Getriebemotor nach einem der Ansprüche 2 oder 3, **dadurch gekennzeichnet,** daß die Auflagefläche (27a, 27b) zwei konzentrische Bahnen (37a) und (37b) umfaßt, die einen kreisbogenförmigen Schlitz bilden.

5. Getriebemotor nach Anspruch 4, **dadurch gekennzeichnet,** daß der Kreis, der als Träger für den kreisbogenförmigen Schlitz (37a, 37b) dient, auf die Achse (29) der Ausgangswelle (10) zentriert ist und einen Radius R aufweist, der in etwa gleich dem Abstand zwischen der Achse (29) der Ausgangswelle und der Achse (28) des Gelenkzapfens (21) ist.

6. Getriebemotor nach Anspruch 1, **dadurch gekennzeichnet,** daß die Reiberhebung (31, 41) auf dem gesamten kreisförmigen Weg des Stifts (7) um die Achse (5) des Zahnrads (4) vorgesehen ist.

7. Getriebemotor nach einem der vorangehenden Ansprüche, **dadurch gekennzeichnet,** daß das einteilige Element (40) außerdem eine ausgesparte Reibscheibe (32, 42) umfaßt, die koaxial zur Ausgangswelle (19) angeordnet ist.

8. Getriebemotor nach einem der vorangehenden Ansprüche, **dadurch gekennzeichnet,** daß die verschiedenen Bestandteile, Dichtung (33) und/ oder Reiberhebung (31, 41) und/oder Reibscheibe (32, 42) und/oder Auflagefläche (27a, 27b), des einteiligen Elements (40) durch Verbindungsmittel (42a-42e, 43a-43c, 44a-44b, 45) miteinander verbunden sind, die an den verschiedenen Bestandteilen des besagten Elements (40) angeformt sind.

9. Getriebemotor nach einem der vorangehenden Ansprüche, **dadurch gekennzeichnet,** daß das einteilige Element (40) aus einem Werkstoff mit niedrigem Reibungskoeffizienten ausgeführt ist.
